# EUROPEAN PATENT APPLICATION

(11) **EP 2 600 365 A2**
(43) Date of publication of application: **05.06.2013**
(21) Application number: 12179418.4
(22) Date of filing: 06.08.2012
(51) Int. Cl.: H01G 9/20

(54) **Dye-sensitized solar cell and method for forming light-scattering layer thereof**

(30) Priority: 01.12.2011 TW 100144241
(71) Applicant: Bureau of Energy, Taipei City 104 (TW)
(72) Inventor: Wu, Jih-jen, 104 TAIPEI CITY (TW); Jiang, Wei-ting, 104 TAIPEI CITY (TW)
(74) Representative: Zakrisson, Ulrika

(57) **Abstract**

A dye-sensitized solar cell (DSSC) and a method for forming a light-scattering layer thereof are provided. The method includes steps of: mixing zinc acetate, strong base and water into a reactive solution; immersing a transparent substrate having a nano-structural layer into the reactive solution; and stirring the reactive solution by a stirring speed of 500-1500 RPM at room temperature, to provide a high-speed flow field, so that zinc acetate can be reacted with the strong base to form flake structures of zinc oxide used as a light scattering layer. Thus, the present invention can provide a simple, rapidly and low-cost manufacturing method for forming the light-scattering layer, and can enhance the light utility rate of DSSC solar cell.

## Description

### FIELD OF THE INVENTION

The present invention relates to a dye-sensitized solar cell (DSSC) and a method for forming a light-scattering layer thereof, and more particularly to a dye-sensitized solar cell (DSSC) wherein flake structures of zinc oxide is used as a light scattering layer and a method for forming the light-scattering layer thereof.

### BACKGROUND OF THE INVENTION

A solar cell (also called photovoltaic cell) is a photoelectrical device that converts the energy of sunlight into electricity. According to materials of cells and operation theory, it can be divided into crystalline silicon solar cell, amorphous silicon solar cell, copper indium gallium selenide (CIGS) solar cell, cadmium telluride (CdTe) thin film solar cell, silicon thin film solar cell, and dye-sensitized solar cell (DSSC), etc., wherein DSSC has advantages of simplifying the fabrication process, mass production and low material cost, so that it already becomes one of the important next-generation solar cells. Recently, with the research, development and improvement of DSSC in the academic community or industries, it is expected to enhance the light utility rate of DSSC. At present, the photoelectric conversion efficiency of small-size dye-sensitized solar cell of 1 cm² or below is already developed to be around 10% to 11 %. Therefore, DSSC has an excellent development basis in aspect of prospective application and mass production.

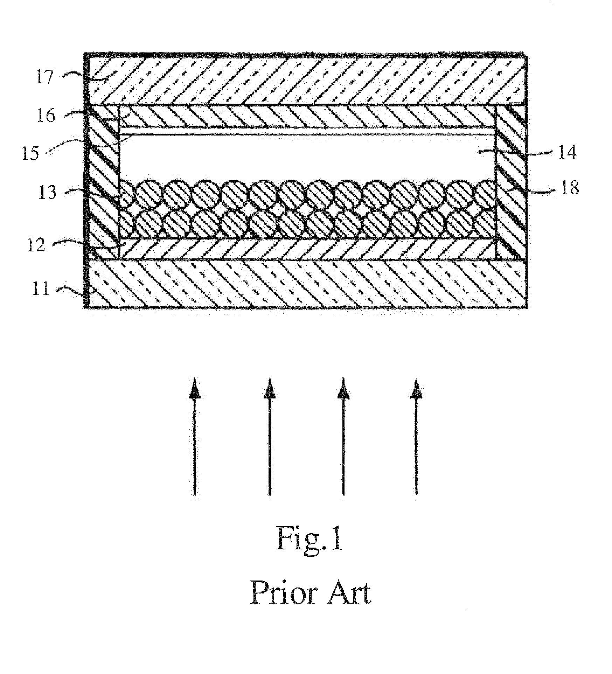

Referring to Fig. 1, a schematic diagram of layered structure of a conventional DSSC is disclosed, wherein the layered structure from bottom to top comprises a first substrate 11, a first transparent conductive film 12, a thin film of titanium dioxide nanoparticles 13, an electrolyte layer 14, a platinum electrode layer 15, a second transparent conductive film 16 and a second substrate 17 in turn, and peripherals of the layered structure are sealed, supported and spaced by two resin spacers 18. Furthermore, the mono-molecular dye of the layered structure has acid groups to adhere on the thin film of titanium dioxide nanoparticles 13 for providing dye photoelectric conversion effect. The dye absorbs photons to be excited to generate electrons which are transmitted to the first transparent conductive film 12 through the thin film of titanium dioxide nanoparticles 13. Simultaneously, the thin film of titanium dioxide nanoparticles 13 receives electrons of the electrolyte layer 14 to achieve a balance stable situation. Therefore, the first transparent electronic film 12 on the first substrate 11 is used as a cathode, and the platinum electrode layer 15 on the second substrate 17 and the second transparent conductive film 16 are used as an anode.

Additionally, for the thin film of titanium dioxide nanoparticles 13 or the other nano-structural thin films, the major function of titanium dioxide or other semiconductor material having wide energy band is to provide the carriers of photosensitive dye and transmit electric charges. For extending the length of the light transmitted pathway in the thin film of titanium dioxide nanoparticles 13, a light scattering layer can be further coated on the thin film of titanium dioxide nanoparticles 13, in order to irregularly scatter the incident light into spaces between the titanium dioxide crystal granules for increasing light absorption of dyes and the filling and absorption efficiencies of dyes on titanium dioxide. For example, a layer with titanium dioxide particles of large diameters (particle diameter about 100-450 nm) can be formed to increase the light scattering effect and the specific surface area of the dye absorption, and to provide a large pore property.

However, as described above, the method of coating the titanium dioxide nanoparticles of larger diameters or other nano-particles onto the electron transmission layer (the thin layer of titanium dioxide nanoparticles 13) mostly is to commercially purchase nano-particles or synthesize nano-particles by oneself. However, the synthesis processes of the nano-particles are complicated. Further, after coating, it still needs a step of high temperature sintering to increase the adhesion between the nano-particles and the adhesion between the nano-particles and the electron transmission layer, so that it is difficult to shorten whole manufacturing processes and reduce the manufacturing cost.

As a result, it is necessary to provide an improved DSSC and a method for forming a light-scattering layer thereof to solve the problems existing in the conventional technologies, as described above.

### SUMMARY OF THE INVENTION

A primary object of the present invention is to provide a dye-sensitized solar cell (DSSC) and a method for forming a light-scattering layer thereof, wherein a reactive solution of precursor of zinc acetate and strong base is used to form flake structures on a nano-structural substrate by chemical bath deposition method at room temperature under a high-speed flow field, and wherein the flake structures of zinc oxide is different to crystal structures of nano-structural layer (such as zinc oxide nanowire array layer or titanium dioxide nanoparticle thin film layer) and can be used as a light scattering layer. Therefore, the present invention can provide a simple, rapidly and low-cost manufacturing method of the light scattering layer, and can provide higher light utility rate for photoelectrodes of DSSC without using expensive equipment or high energy consuming process. In comparison with the conventional manufacturing process of the light scattering layer, the present invention can considerably lower manufacture cost and time consumption. Thus, the zinc oxide flake structures formed by the present invention can be used as the light scattering layer which can really enhance the lower photoelectric conversion efficiency of the photoelectrode only constructed by the nano-structural layer of the conventional technique.

To achieve the above object, the present invention provides a method for forming a light-scattering layer of a dye-sensitized solar cell (DSSC), which comprises steps of:
mixing zinc acetate, strong base and water with each other to form a reactive solution;
immersing a transparent substrate into the reactive solution, wherein the transparent substrate has a nano-structural layer; and
stirring the reactive solution by a stirring speed of 500-1500 RPM at room temperature for providing a high-speed flow field to induce zinc acetate to react with the strong base, so as to form, as a light scattering layer, a layer of flake structures of zinc oxide on the nano-structural layer.

In one embodiment of the present invention, the step of mixing zinc acetate, strong base and water with each other to form the reactive solution comprises steps of:
adding zinc acetate and the strong base into water and mixing with each other to form an original solution;
placing the original solution in an ice-bath; and
adding water to dilute the original solution to be the reactive solution.

In one embodiment of the present invention, the original solution contains 0.4-0.6 M of zinc acetate and 3-5 M of the strong base in 4 mL of water.

In one embodiment of the present invention, the original solution is diluted to 10 times with water, so as to become the reactive solution.

In one embodiment of the present invention, the strong base is selected from sodium hydroxide (NaOH) or potassium hydroxide (KOH).

In one embodiment of the present invention, the transparent substrate is a transparent conductive oxide (TCO) glass or a transparent conductive oxide polymer film.

In one embodiment of the present invention, the nano-structural layer is a layer of zinc oxide nanowire array or a thin film of titanium dioxide nanoparticles.

In one embodiment of the present invention, the nano-structural layer is a nanowire array layer, the nanowire array layer is arranged with a plurality of nanowires, and at least one portion of surfaces of the nanowires is formed with the flake structure of zinc oxide.

In one embodiment of the present invention, the thickness of the nano-structural layer is between 3 and 10 µm; and the thickness of the light-scattering layer is between 300 nm and 1 µm.

Furthermore, the present invention provides a dye-sensitized solar cell (DSSC), which comprises:
a transparent substrate;
a nano-structural layer formed on the transparent substrate; and
a light scattering layer formed on the nano-structural layer, wherein the light scattering layer is a layer of flake structures of zinc oxide.

In one embodiment of the present invention, the transparent substrate is a transparent conductive oxide glass or a transparent conductive oxide polymer film.

In one embodiment of the present invention, the nano-structural layer is a layer of zinc oxide nanowire array or a thin film of titanium dioxide nanoparticles.

In one embodiment of the present invention, the nano-structural layer is a nanowire array layer, the nanowire array layer is arranged with a plurality of nanowires, and at least one portion of surfaces of the nanowires is formed with the flake structures of zinc oxide.

In one embodiment of the present invention, the thickness of the nano-structural layer is between 3 and 10 µm; and the thickness of the light-scattering layer is between 300 nm and 1 µm.

### DESCRIPTION OF THE DRAWINGS

Fig. 1 is a schematic diagram of a layered structure of a conventional dye-sensitized solar cell (DSSC);
Figs. 2A, 2B and 2C are processing diagrams of a method for forming a light-scattering layer of a DSSC according to a preferred embodiment of the present invention;
Fig. 3 is a schematic diagram of a layered structure of the DSSC according to the preferred embodiment of the present invention;
Figs. 4A and 4B are scanning electron microscope (SEM) images showing top and side views of a nano-structural layer before forming a light-scattering layer thereon according to the present invention;
Figs. 4C and 4D are SEM images showing top and side views of the nano-structural layer after forming the light-scattering layer thereon (stirring speed of 1000 RPM) according to the present invention;
Fig. 5 is a curve graph of diffuse reflectance rate before (NW-1, NW-2) and after (NW1-S) forming the light-scattering layer on the nano-structural layer according to the present invention;
Fig. 6 is a curve graph of photoelectric conversion efficiency of DSSC samples without the light-scattering layer (NW-2) and with the light-scattering layer (NW1-S) according to the present invention;
Fig. 7 is a curve graph of incident photon to current efficiency (IPCE) of DSSC samples without the light-scattering layer (NW-2) and with the light-scattering layer (NW1-S) of the present invention;
Figs. 8A and 8B are SEM images showing top and side views of the nano-structural layer after forming the light-scattering layer thereon in a high-speed flow field of 500 RPM according to the present invention;
Figs. 9A and 9B are SEM images showing top and side views of the nano-structural layer after forming the light-scattering layer thereon in a high-speed flow field of 1500 RPM according to the present invention; and
Figs. 10A and 10B are SEM images showing top and side views of another nano-structural layer after forming the light-scattering layer thereon according to another embodiment of the present invention.

### DETAILED DESCRIPTION OF THE PREFERRED EMBODIMENTS

The structure and the technical means adopted by the present invention to achieve the above and other objects can be best understood by referring to the following detailed description of the preferred embodiments and the accompanying drawings. Furthermore, directional terms described by the present invention, such as upper, lower, front, back, left, right, inner, outer, side, longitudinal/vertical, transverse/horizontal, and etc., are only directions by referring to the accompanying drawings, and thus the used directional terms are used to describe and understand the present invention, but the present invention is not limited thereto.

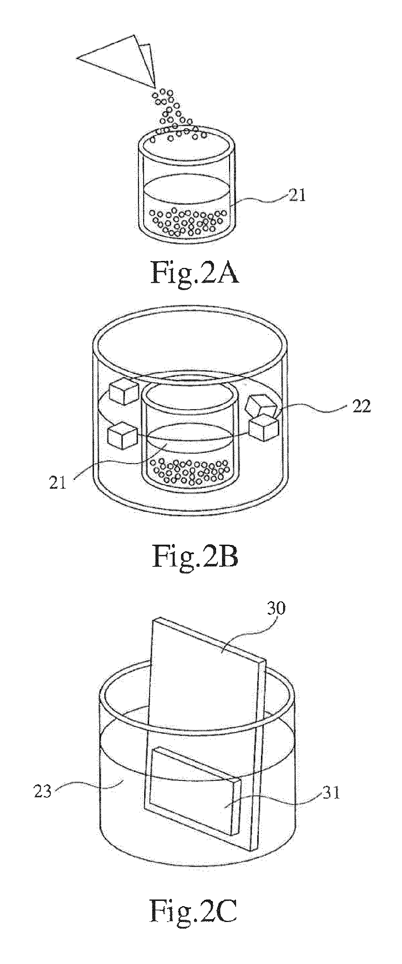

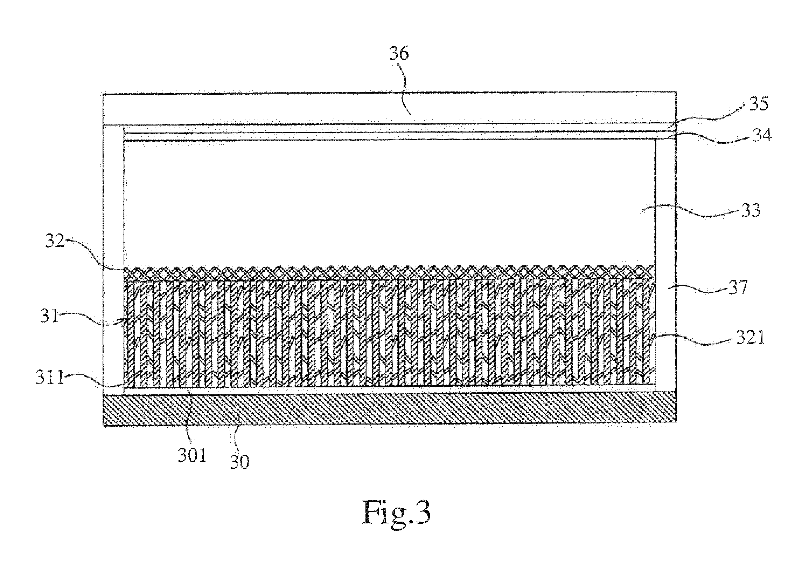

Referring now to Figs. 2A, 2B, 2C and Fig. 3 a method for forming a light-scattering layer of a dye-sensitized solar cell (DSSC) according to a preferred embodiment of the present invention is illustrated, and the method comprises steps of: (S01) mixing zinc acetate, strong base and water with each other to form a reactive solution 23; (S02) immersing a transparent substrate 30 into the reactive solution 23, wherein the transparent substrate 30 has a nano-structural layer 31; and (S03) stirring the reactive solution 23 by a stirring speed of 500-1500 RPM at room temperature for providing a high-speed flow field to induce zinc acetate to react with the strong base, so as to form flake structures 321 of zinc oxide on the nano-structural layer 31 as a light scattering layer 32. The content and theory of the steps in the preferred embodiment of the present invention will be described more detailed in turn hereinafter by referring to Figs. 2A to 3.

Referring to Figs. 2A, 2B and 2C, the step (S01) of the method for forming a light-scattering layer of a dye-sensitized solar cell (DSSC) according to the preferred embodiment of the present invention is to mix zinc acetate, strong base and water with each other to form a reactive solution 23. In the step, the present invention can firstly add zinc acetate (Zn(CH₃COO)₂) and strong base into water, so as to mix each other and form an original solution 21 with higher concentration. Then, placing a container with the original solution 21 into an ice-bath tank 22 for ice-bathing the original solution 21, so that the original solution 21 can be temporarily stored for to the following use; when the following step will be executed, adding water to dilute the original solution 21 into the reactive solution 23. For example, the foregoing strong base is selected from sodium hydroxide (NaOH) or potassium hydroxide (KOH). The original solution 21, for example, can contain 0.4 M to 0.6 M of zinc acetate and 3 M to 5 M of the strong base in 4 mL of water. When it is used, the original solution 21 is diluted to 10 times with water until 40 mL, and it becomes the reactive solution 23 due to dilution.

Referring back to Fig. 2C, the step (S02) of the method for forming a light-scattering layer of a dye-sensitized solar cell (DSSC) according to the preferred embodiment of the present invention is to immerse a transparent substrate 30 into the reactive solution 23, wherein the transparent substrate 30 has a nano-structural layer 31. In the step, the transparent substrate 30 can be selected from a transparent conductive oxide (TCO) glass or a transparent conductive oxide polymer film. If it is the latter, the polymer thin film can be one of various flexible plastic substrates, such as polyethylene terephthalate (PET), ethylene naphthalate (PEN) or polyimide (PI). A transparent conducting film 301 is pre-formed on the transparent substrate 30, and the nano-structural layer 31 with a suitable form is formed on the transparent conducting film 301, for example, the nano-structural layer 31 is a zinc oxide (ZnO) nanowire array or a thin film of titanium dioxide (TiO₂) nanoparticles.

In the embodiment shown in Fig. 3, the present invention uses the zinc oxide (ZnO) nanowire array as the nano-structural layer 31 which comprises a plurality of long-linear nanowires of zinc oxide 311 in regular or irregular arrangement. Simultaneously, the thickness of the nano-structural layer 31 (i.e. the height of the zinc oxide nanowire 311) is between 3 and 10 µm, and the diameter of the zinc oxide nanowire 311 is between 50 and 100 nm. Before immersing the transparent substrate 30 into the reactive solution 23, a polytetrafluoroethylene (PTFE) tapes can be used to attach on substrate area which will be not processed by the following reaction, in order to avoid from forming an excess unnecessary area of the flake structures of zinc oxide.

Referring to Fig. 2C and Fig. 3, the step (S03) of the method for forming a light-scattering layer of the dye-sensitized solar cell (DSSC) according to the preferred embodiment of the present invention is to stir the reactive solution 23 by a stirring speed of 500-1500 RPM at room temperature for providing a high-speed flow field to induce zinc acetate to react with the strong base, so as to form a layer of flake structures of zinc oxide 321 on the nano-structural layer 31 as a light scattering layer 32. In the step, in order not to form the non-flake structures of zinc oxide( such as nano-rods, nano-wires or nano-tips, etc.) after zinc acetate reacts to strong base, the present invention must control that zinc acetate is reacted with strong base in the high-speed flow field of 500-1500 RPM. Thus, it can confirm to form a layer of flake structures of zinc oxide 321 in regular or irregular arrangement after reaction of zinc acetate and strong base, wherein the foregoing layer of flake structures of zinc oxide 321 can be use as a light scattering layer 32, wherein the thickness of the light scattering layer 32 is preferably between 300 nm and 1 µm.

Furthermore, the present invention can place a magnetic stirring bar 24 into the container of the reactive solution 23, and place the container of the reactive solution 23 on a stirring apparatus in which has a magnetic stir plate. Accordingly, the stirring apparatus is used to cause the magnetic stirring bar 24 to stir in high speed, for providing the high-speed flow field of 500-1500 RPM, such as 1000 RPM. In addition, the above-mentioned reaction can be directly carried out at room temperature, wherein the room temperature as described in the present invention means a normal temperature around 25 °C, such as 15 to 35 °C. After the reaction is finished, a layer of flake structures of zinc oxide 321 is formed on the nano-structural layer 31, and thus used as the light scattering layer 32. Then, the transparent substrate 30 having the nano-structural layer 31 and the flake structures of zinc oxide 321 can be further used to form other stacked layer structures for manufacturing the dye-sensitized solar cell, in order to finish the manufacture of the DDSC product. It should be noted that the nano-structural layer 31 may be a nanowire array layer, wherein the nanowire array layer is arranged with a plurality of nanowires (such as the zinc oxide nanowires 311), and wherein at least one portion of surfaces of crystal columns of the nanowires may be formed with a small quantity of the flake structures of zinc oxide 321 in random scattering arrangement.

Referring to Fig. 3, a layered structure of the dye-sensitized solar cell (DSSC) according to the preferred embodiment of the present invention is illustrated, and comprises: a transparent substrate 30, a transparent conductive film 301, a nano-structural layer 31, a light scattering layer 32, an electrolyte layer 33, a platinum coated film 34, another one transparent conductive film 35 and another one transparent substrate 36. The peripherals of the layered structure are sealed, supported and separated by two resin spacers 37. The transparent substrate 30 can be selected from a transparent conductive oxide (TCO) glass or a transparent conductive oxide polymer film. The transparent conductive film 301 is a transparent electron layer formed on the transparent substrate 30 and used as an anode. The nano-structural layer 31 is formed on the transparent conducting film 301 of the transparent substrate 30, and can be a nanowire array layer of zinc oxide, which comprises a plurality of long-linear nanowires of zinc oxide 311. The light scattering layer 32 is formed on the top of the nano-structural layer 31. The light scattering layer 32 is a thin film constructed by a plurality of flake structures of zinc oxide 321 in scattering arrangement. Also, at least one portion of crystal columns of surfaces of the zinc oxide nanowires 311 can be formed with a small quantity of the flake structures of zinc oxide 321 in random scattering arrangement. In other words, the nano-structural layer 31 can be a composite structural layer constructed by the zinc oxide nanowires 311 and the flake structures of zinc oxide 321.

Furthermore, the electrolyte layer 33 contains, for example, iodine electrolyte which is necessary for redox reaction. Simultaneously, dye molecules (not shown) generally used in the dye-sensitized solar cell are sandwiched between the electrolyte layer 33 and the nano-structural layer 31, wherein the dye molecules are filled into gaps between crystals of the zinc oxide nanowires 311 of the nano-structural layer 31 and/or between crystals of the flake structures of zinc oxide 321 in the light scattering layer 32, and attached on surfaces of the two type of crystals. The platinum coated film 34 having high catalytic activity and high reflective effect can reduce tri-iodide ion complex (I₃⁻ ) to iodine (I⁻⁾, and can reflects sunlight. The structure and function of the transparent conductive film 35 and the transparent substrate 36 are similar to the transparent substrate 30 and the transparent conductive film 301, but the transparent conducting film 35 is used as a cathode.

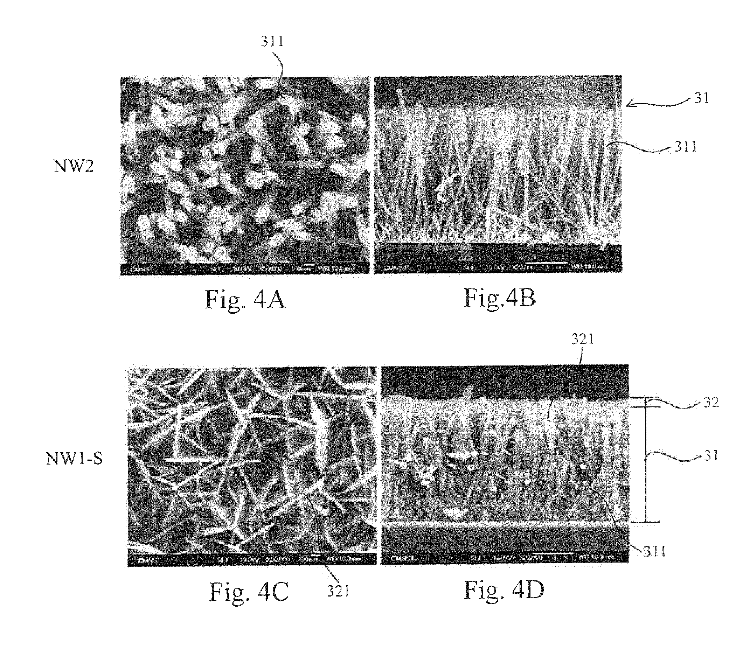

Referring to Figs. 4A and 4B, scanning electron microscope (SEM) images showing top and side views of a nano-structural layer before forming a light-scattering layer thereon according to the present invention are illustrated, wherein the transparent substrate 30 of Figs. 4A and 4B only has the nano-structural layer 31 thereon (i.e. a control group, NW2). The nano-structural layer 31 has the long-linear nanowires of zinc oxide 311 in regular or irregular arrangement, and the thickness (height) of the nano-structural layer 31 is about 3.0-3.2 µm and its diameter is about 50-100 nm.

Referring to Figs. 4C and 4D, SEM images showing top and side views of the nano-structural layer after forming the light-scattering layer thereon (stirring speed of 1000 RPM) according to the present invention are illustrated, wherein the transparent substrate 30 of Figs. 4C and 4D has the nano-structural layer 31 and the light scattering layer 32 thereon (i.e. experimental group, NW1-S). The size of the nano-structural layer 31 is the same as the above-mentioned control group; the light scattering layer 32 is a layer of the flake structures of zinc oxide 321 in regular or irregular arrangement, and the thickness (height) thereof is about 1 µm. Simultaneously, at least one portion of surfaces of crystal columns of the zinc oxide nanowires 311 is formed with a small quantity of the flake structures of zinc oxide 321 in random scattering arrangement.

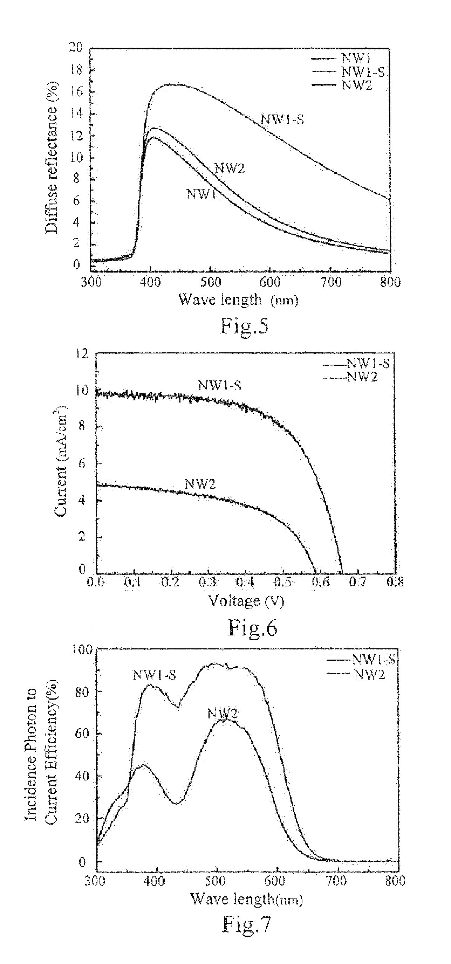

Referring to Fig. 5, a curve graph of diffuse reflectance rate before (NW-1, NW-2) and after (NW1-S) forming the light-scattering layer on the nano-structural layer according to the present invention is illustrated, wherein the control group, NW-1, has curve values generated by measuring the experimental group, NW1-S, before forming the light scattering layer 32; the control group, NW-2, only has the other curve values generated by measuring the transparent substrate 30 only having the nano-structural layer 31 (substantially equal to NW-1); and the experimental group, NW1-S, has curve values generated by measuring after forming the light scattering layer 32. In the comparison result in Fig. 5, it indicates that the experimental group, NW1-S, after forming the light scattering layer 32, can significantly increase the diffuse reflection ratio of light having wavelengths greater than 400 nm.

Referring to Fig. 6, a curve graph of photoelectric conversion efficiency of DSSC samples without the light-scattering layer (NW-2) and with the light-scattering layer (NW1-S) according to the present invention is illustrated, wherein the transparent substrates 30 of the control group, NW-2, and the experimental group, NW1-S, as above-mentioned, are further manufactured to form a layered structure of the dye-sensitized solar cell, as shown in Fig. 3 shown, and then the photoelectric conversion efficiency thereof is measured. In comparison with relative values of the curve graph of photoelectric conversion efficiency in Fig. 6 and Table 1 below, it indicates that the experimental group, NW1-S, after forming the light scattering layer 32, also can significantly increase photoelectric conversion efficiency.

**Table 1. Relative values of photoelectric conversion efficiency**

| | open circuit voltage Voc (V) | short circuit current density Jsc (mA/cm²) | fill-factor F.F. | photoelectric conversion efficiency η (%) |
|---|---|---|---|---|
| Experimental group NW1-S | 0.66 | 9.85 | 0.63 | 4.09 |
| Control group NW-2 | 0.59 | 4.87 | 0.55 | 1.58 |

Referring to Fig. 7, a curve graph of incident photon to current efficiency (IPCE) of DSSC samples without the light-scattering layer (NW-2) and with the light-scattering layer (NW1-S) of the present invention is illustrated. In comparison with the curve graph of IPCE in Fig. 7, it indicates that the experimental group, NW1-S, after forming the light scattering layer 32, can significantly increase the IPCE value.

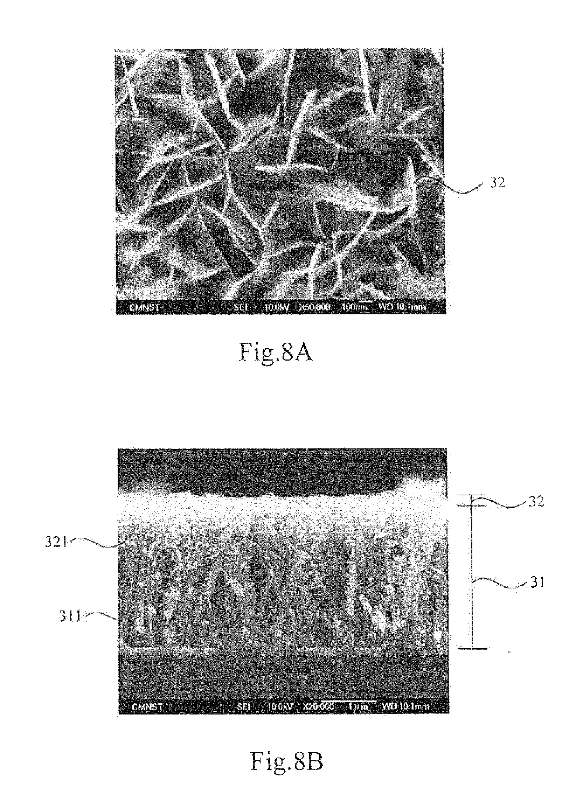

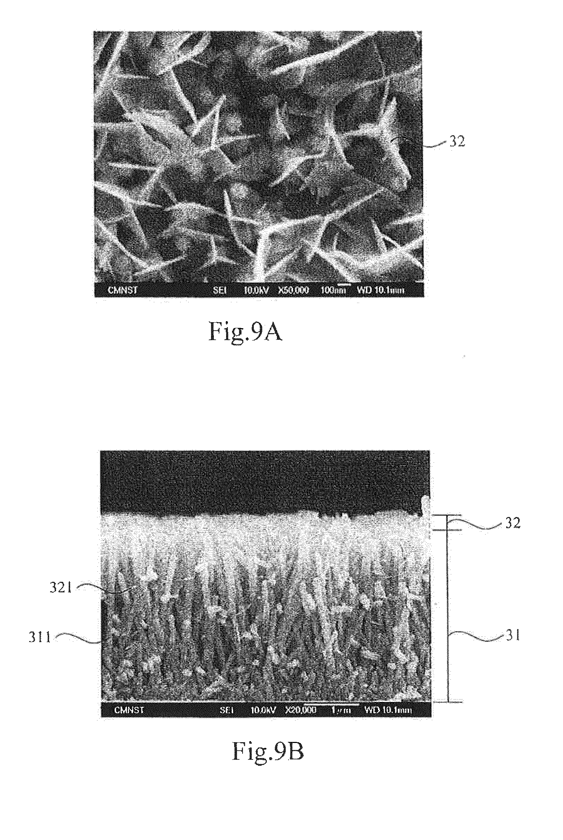

On the other hand, to confirm the stirring speed needed to stir the reactive solution 23 at room temperature to form suitable flake structures of zinc oxide 321 on the nano-structural layer 31, Figs. 8A and 8B thus illustrate SEM images showing top and side views of the nano-structural layer 31 after forming the light-scattering layer 32 thereon in a high-speed flow field of 500 RPM according to the present invention; and Figs. 9A and 9B illustrate SEM images showing top and side views of the nano-structural layer 31 after forming the light-scattering layer 32 thereon in a high-speed flow field of 1500 RPM according to the present invention. As shown in Fig. 8A to Fig. 9B, in the present invention, the reactive solution 23 is stirred by a stirring speed of 500-1500 RPM (a high-speed flow field) at room temperature to form a layer of flake structures of zinc oxide 321 as a light scattering layer 32. Simultaneously, the range of stirring speed can avoid from forming the non-flake structures of zinc oxide, such as nano-rods, nano-wires or nano-tips, etc. Furthermore, at least one portion of surfaces of crystal columns of zinc oxide nanowires 311 may be also formed with a small quantity of the flake structures of zinc oxide 321 in random scattering arrangement.

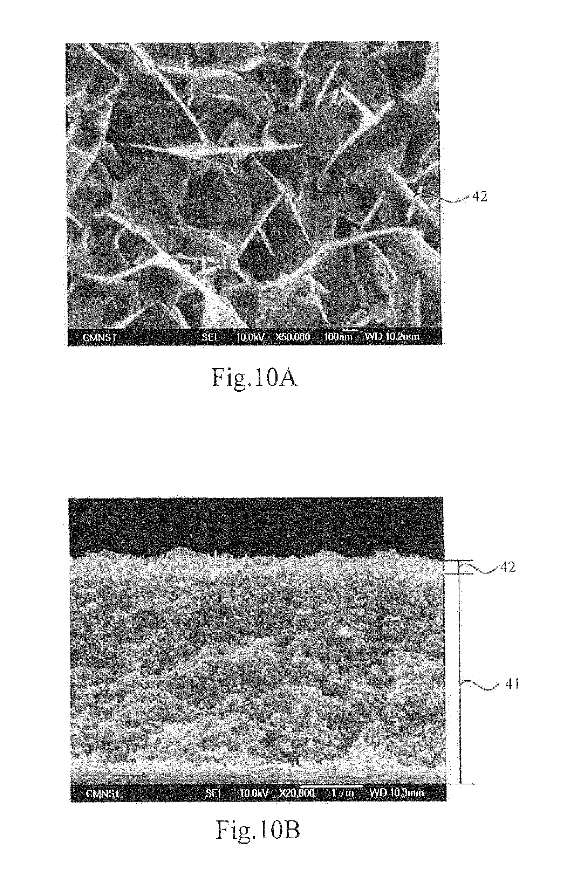

In another embodiment of the present invention, referring to Figs. 10A and 10B, the nano-structural layer 31 of the transparent conductive film 301 can be also selected from a thin film of titanium dioxide (TiO₂) nanoparticles 41 in advance. And, after immersing the transparent substrate into the reactive solution 23 as shown in Fig. 2C, the reactive solution 23 also can be stirred by a stirring speed of 500-1500 RPM at room temperature to form a layer of flake structures of zinc oxide on the thin film of nanoparticles 41 as a light scattering layer 42. The thin film of nanoparticles 41 contains a plurality of titanium dioxide (TiO₂) nanoparticles in regular or irregular arrangement, and its thickness (height) is about 3.0-3.2 µm. Because the thin film of titanium dioxide (TiO₂) nanoparticles is denser, there is basically no flake structures of zinc oxide formed in the thin film of nanoparticles 41.

As described above, in comparison with the conventional method of coating the titanium dioxide (TiO₂) nanoparticles of larger diameters on the electron transmission layer, which has disadvantages of complicated fabricating processes and necessary high temperature sintering after coating, long duration of whole manufacturing processes and difficult to lower manufacturing cost, the reactive solution of the present invention as shown in Figs. 2A-10B is provided with the precursor of zinc oxide (such as zinc acetate) and strong base, and the reactive solution is used to form the flake structures on the nano-structural material by room-temperature chemical bath deposition method in a particular high speed field, wherein the layer of flake structures of zinc oxide is different from the crystal structure of the nano-structural layer (such as a zinc oxide nanowire array or a thin layer of titanium dioxide nanoparticles) and can be used as the light scattering layer. Therefore, the present invention can provide a simple, rapidly and low-cost manufacturing method of the light scattering layer, and can enhance the light utility rate of photoelectrode (nano-structural layer and the dye molecules attached thereon) of DSSC. The present invention does not need expensive equipment and high energy consuming procedure. In comparison with the conventional method of manufacturing light scattering layer, the present invention can substantially decrease the time and cost of manufacturing procedure in necessary. The layer of flake structures of zinc oxide according to the present invention can be used as the light scattering layer, to certainly enhance the lower photoelectric conversion efficiency generated by traditional photoelectrodes only made of nano-structural layer.

The present invention has been described with a preferred embodiment thereof and it is understood that many changes and modifications to the described embodiment can be carried out without departing from the scope and the spirit of the invention that is intended to be limited only by the appended claims.

## Claims

1. A method for forming a light-scattering layer of a dye-sensitized solar cell (DSSC), comprising steps of:
mixing zinc acetate, strong base and water with each other to form a reactive solution;
immersing a transparent substrate into the reactive solution, wherein
the transparent substrate has a nano-structural layer; and
stirring the reactive solution by a stirring speed of 500-1500 RPM at room temperature for providing a high-speed flow field to induce zinc acetate to react with the strong base, so as to form, as a light scattering layer, a layer of flake structures of zinc oxide on the nano-structural layer.

2. The method according to claim 1, wherein the step of mixing zinc acetate, strong base and water with each other to form the reactive solution comprises steps of:
adding zinc acetate and the strong base into water and mixing with each other to form an original solution;
placing the original solution in an ice-bath; and
adding water to dilute the original solution to be the reactive solution.

3. The method according to claim 2, wherein the original solution contains 0.4-0.6 M of zinc acetate and 3-5 M of the strong base in 4 mL of water.

4. The method according to claim 2 or 3, wherein the original solution is diluted to 10 times with water, so as to become the reactive solution.

5. The method according to any of claims 1-4, wherein the strong base is selected from sodium hydroxide or potassium hydroxide.

6. The method according to any of claims 1-5, wherein the transparent substrate is a transparent conductive oxide glass or a transparent conductive oxide polymer film.

7. The method according to any of claims 1-6, wherein the nano-structural layer is a layer of zinc oxide nanowire array or a thin film of titanium dioxide nanoparticles.

8. The method according to any of claims 1-7, wherein the nano-structural layer is a nanowire array layer, the nanowire array layer is arranged with a plurality of nanowires, and at least one portion of surfaces of the nanowires is formed with the flake structures of zinc oxide.

9. The method according to any of claims 1-8, wherein the thickness of the nano-structural layer is between 3 and 10 µm; and the thickness of the light-scattering layer is between 300 nm and 1 µm.

10. A dye-sensitized solar cell (DSSC), comprising:
a transparent substrate;
a nano-structural layer formed on the transparent substrate; and
a light scattering layer formed on the nano-structural layer, wherein the light scattering layer is a layer of flake structures of zinc oxide.

11. The DSSC according to claim 10, wherein the transparent substrate is a transparent conductive oxide glass or a transparent conductive oxide polymer film.

12. The DSSC according to any of claims 10-11, wherein the nano-structural layer is a layer of zinc oxide nanowire array or a thin film of titanium dioxide nanoparticles.

13. The DSSC according to any of claims 10-12, wherein the nano-structural layer is a nanowire array layer, the nanowire array layer is arranged with a plurality of nanowires, and at least one portion of surfaces of the nanowires is formed with the flake structures of zinc oxide.

14. The DSSC according to any of claims 10-13, wherein the thickness of the nano-structural layer is between 3 and 10 µm; and the thickness of the light-scattering layer is between 300 nm and 1 µm.
